# EUROPÄISCHE PATENTSCHRIFT

(11) **EP 2 807 072 B1**
(45) Veröffentlichungstag und Bekanntmachung des Hinweises auf die Patenterteilung: **13.04.2016**
(21) Anmeldenummer: 13700277.0
(22) Anmeldetag: 07.01.2013
(51) Int. Cl.: B62D 35/00

(54) **LUFTLEITELEMENT**
AIR GUIDING ELEMENT
ELÉMENT DE GUIDAGE D'AIR

(30) Priorität: 27.01.2012 DE 102012201219
(43) Veröffentlichungstag der Anmeldung: 03.12.2014
(73) Patentinhaber: Jost-Werke GmbH, 63263 Neu-Isenburg (DE)
(72) Erfinder: ALGÜERA GALLEGO, José Manuel, 63739 Aschaffenburg (DE); RICHTER, Martin, 60389 Frankfurt (DE)
(74) Vertreter: Mehler Achler
(86) Internationale Anmeldenummer: PCT/EP2013/050154
(87) Internationale Veröffentlichungsnummer: WO 2013/110487

(56) Entgegenhaltungen:
- EP-A2- 1 870 320
- DE-A1- 3 151 574
- FR-A1- 2 451 852
- US-A- 4 702 509

## Beschreibung

Die Erfindung betrifft ein Luftleitelement für ein verbessertes Überströmen eines Spaltes zwischen einem Zugfahrzeug und einem Anhängerfahrzeug gemäß den im Oberbegriff des Anspruchs 1 stehenden Merkmalen.

Während des Fahrbetriebes sind das Zugfahrzeug und das Anhängerfahrzeug stets über eine Kupplungseinrichtung mechanisch miteinander verbunden. Unter einem Zugfahrzeug und einem Anhängerfahrzeug wird zunächst ein Sattelzug verstanden, der üblicherweise aus einer Sattelzugmaschine als Zugfahrzeug und einem Sattelauflieger als Anhängerfahrzeug gebildet ist. Beide Fahrzeuge sind in diesem Fall über eine Kupplungseinrichtung umfassend eine Sattelkupplung und einen Königszapfen lösbar aneinander gekuppelt. Die Erfindung kann aber auch an einem Gliederzug bestehend aus einem Motorwagen als Zugfahrzeug und einem Anhänger als Anhängerfahrzeug verwirklicht sein. Derartige Fahrzeuge sind üblicherweise mittels einer Kupplungseinrichtung umfassend eine Bolzenkupplung und eine darin gehaltene Deichsel miteinander verbunden. Darüber hinaus ist es auch möglich, dass bei mehrgliedrigen Anhängerfahrzeugen das Zugfahrzeug einen vorderen, näher am Zugfahrzeug angeordneten Sattelauflieger oder Anhänger und das Anhängerfahrzeug einen hinteren, weiter zur Sattelzugmaschine oder zum Motorwagen beabstandeten Sattelauflieger oder Anhänger umfasst.

Die gattungsgemäße Druckschrift DE 31 51 574 A1 offenbart einen Lastwagen mit einem Fahrerhaus und einem dahinter befindlichen, abgeschlossen Laderaum, der unter anderem aus zwei aufblasbaren, U-förmigen Türstöcken und einem dazwischen verlaufenden Achsschlauch aufgespannt ist. Das Aufblasen beider Türstöcke und des Achsschlauches kann mittels des sich im Fahrbetrieb einstellenden Staudruckes erfolgen, wobei hierfür ein Anschlussschlauch und ein sich in Fahrtrichtung öffnender Trichter vorgesehen ist.

Zwischen dem Zugfahrzeug und dem Anhängerfahrzeug befindet sich in angekuppeltem Zustand ein Spalt, der während der Fahrt zu erheblichen Verwirbelungen der überströmenden Luft und damit für einen verhältnismäßig hohen Kraftstoffverbrauch sorgt. Eine vorgegebene Mindestspaltweite ist jedoch notwendig, da insbesondere bei Kurvenfahrten zwischen Zugfahrzeug und Anhängerfahrzeug eine Relativbewegung stattfindet und andernfalls die Gefahr besteht, dass bei einer scharfen Kurvenfahrt die kurveninnenliegende, vordere Ecke des Anhängerfahrzeugs mit dem Zugfahrzeug kollidiert. Auch bei scharfen Bremsungen können Teile des Anhängerfahrzeugs aufgrund von Lastwechselreaktionen gegen das Zugfahrzeug stoßen.

In der Vergangenheit gab es daher bereits Bestrebungen, den Spalt zwischen Zugfahrzeug und Anhängerfahrzeug zum Beispiel mit Luftleitelementen abzudecken. Aus der US 3,711,146 ist beispielsweise eine an der Rückwand des Fahrerhauses angreifende Luftleitschürze bekannt geworden, welche in der Fahrzeuglängsachse mehrere gegeneinander teleskopierbare Segmente umfasst. Vor Fahrtantritt werden die Segmente ausgezogen und die Breite der Luftleitschürze entsprechend der Breite des tatsächlichen Spaltes derart angepasst, dass der Spalt weitgehend abgedeckt ist. Das an einen Auflieger angrenzende Segment der Luftleitschürze soll aus Gummi oder einem anderen elastischen Material hergestellt sein und ein Anstoßen von Teilen des Aufliegers beim Durchfahren größerer Kurvenradien zulassen. Für enge Kurvenradien oder einen Aufliegerwechsel lässt sich die Luftleitschürze manuell oder mittels von Stellzylindern in Richtung des Fahrerhauses zurückschieben. Der wesentliche Nachteil dieser bekannten Luftleitschürze liegt in deren Anpassung vor Fahrtantritt und das dadurch nicht zu vermeidende Anstoßen des Aufliegers an die Luftleitschürze. Hierdurch kommt es immer wieder zu Beschädigungen der Luftleitschürze oder des Aufliegers.

Einen anderen Stand der Technik stellt die US 3,834,752 dar. Das Überbrücken des Spaltes zwischen Zugfahrzeug und Anhängerfahrzeug wird hierbei mittels eines aufblasbaren Luftsackes realisiert, welcher auf der Vorderseite des Anhängerfahrzeugs angebracht ist und nach dem Ankuppeln des Zugfahrzeugs an der Rückwand des Fahrerhauses lösbar befestigt wird. Der ansonsten geschlossene Luftsack wird über eine Druckluftleitung des Zugfahrzeugs aufgeblasen und dadurch stabilisiert. Die Druckluftversorgung des Luftsackes soll insbesondere über den Kompressor der Fahrzeugbremsanlage erfolgen. Als nachteilig hat sich erwiesen, dass das Zugfahrzeug mit einer erheblichen Kompressorleistung ausgestattet sein muss, um neben der Bremsanlage auch das Volumen des mehrere Kubikmeter großen Luftsackes zu füllen. Dieses Problem verschärft sich noch, wenn der Luftsack durch Beschädigungen undicht wird und der Kompressor mithin nicht mehr in der Lage ist, die Druckspeicher der Bremsanlage zu füllen. Dieses könnte unter Umständen zum Ausfall der Bremsanlage führen, so dass der Sattel- beziehungsweise Gliederzug liegenbleibt.

Die EP 1 870 320 A2 beschreibt einen Sattelzug bestehend aus einem Zugfahrzeug und einem Auflieger, wobei das Zugfahrzeug ein Fahrerhaus aufweist, an dessen Rückwand, U-förmig um dessen Querschnittskontur, mit Druckluft aufblasbare Luftleitelemente angeordnet sind. Eine Verstellung oder Anpassung der Luftleitelemente soll über ein Aufblas- und Pack-/Rückzugssystem erfolgen, welches ein kontinuierliches Abblasen und eine Entleerung garantiert, sobald ein Luftkissen gegen den Auflieger stößt.

Aus diesem Grund lag der Erfindung die Aufgabe zugrunde, ein weitgehend wartungsarmes und betriebssicheres Luftleitelement für ein verbessertes Überströmen des Spaltes zwischen einem Zugfahrzeug und einem Anhängerfahrzeug bereitzustellen, welches unabhängig von der Druckluftversorgung des Zugfahrzeugs installierbar ist.

Die Aufgabe wird erfindungsgemäß mit den kennzeichnenden Merkmalen des Anspruchs 1 gelöst. Unter einem Luftkissen wird eine geschlossene Umhüllung aus einem flexiblen und luftdichten Wandmaterial verstanden. Der Füllkanal kann aus einer Rohrleitung oder einer Bohrung gebildet sein. Der Füllkanal geht unmittelbar in die Lufteintrittsöffnung über, welche sich vorzugsweise in Fahrtrichtung konisch aufweitet. Der Staudruck ist der dynamische Druck und entspricht der Erhöhung des Drucks am Staupunkt eines umströmten Körpers gegenüber dem statischen Druck des Fluids, hier der Umgebungsluft.

Mit Hilfe des erfindungsgemäßen Luftleitelementes kann der Spalt zwischen dem Zug- und Anhängerfahrzeug nahezu vollständig geschlossen werden. Hierfür sind nur geringfügige Modifikationen notwendig, so dass sich das Luftleitelement auch an bestehenden Fahrzeugen nachrüsten lässt.

Für eine aerodynamisch günstige Wirkung sollte das Luftkissen zugfahrzeugseitig an die Querschnittskontur des Aufbaus angepasst sein, wodurch außerdem eine umlaufende Befestigung möglich wird. Seitens des Anhängerfahrzeugs muss das Luftkissen auf dessen Höhe und Breite angestimmt sein. Vor dem oberen Bereich des Luftkissens kann ein Dachspoiler angeordnet sein, so dass das Höhenniveau des Anhängerfahrzeugs bereits erreicht ist und das Luftkissen lediglich den Spaltraum in horizontaler Richtung zu überbrücken braucht. In diesem Fall ist die Dachwand des Zugfahrzeugs durch den Dachspoiler gebildet.

Gemäß einer einfachen Ausführungsform ist vorgesehen, dass das Luftkissen bei geringer Geschwindigkeit zusammenfällt, indem der Innendruck durch den nicht oder kaum mehr vom Staudruck beaufschlagten Füllkanal entweicht. Dadurch wird ohne zusätzliche Steuerungskomponenten, elektronische Steuerung oder Ventile sichergestellt, dass ein Rangieren bei niedriger Fahrgeschwindigkeit mit großen Relativbewegungen zwischen Zugfahrzeug und Anhängerfahrzeug möglich ist.

Der erforderliche Innendruck wird an der Front des Zugfahrzeugs abgenommen und wächst mit der Geschwindigkeit. Dadurch kann das Luftkissen insbesondere bei höheren Geschwindigkeiten so weit aufblähen, dass es mithin auch eine abdichtende Funktion zwischen Zugfahrzeug und Anhängerfahrzeug einnimmt. Dabei bleibt das Luftkissen so weit elastisch, dass Lenkbewegungen und damit Relativbewegungen zwischen dem Zugfahrzeug und dem Anhängerfahrzeug nicht behindert werden.

Das Luftkissen ist vorzugsweise an dem Zugfahrzeug fest installiert. Es ist jedoch auch eine Installation an der Front des Anhängerfahrzeugs denkbar. Das Luftkissen kann jedoch nur an dem Zugfahrzeug oder dem Anhängerfahrzeug fest montiert sein, da es bei langsamer Fahrt, insbesondere während des Rangierens, eine Relativbewegung von Zug- und Anhängerfahrzeug zulassen muss, ohne zu zerreißen.

Ein weiterer Vorteil des erfindungsgemäßen Luftleitelementes liegt darin, dass bei geeigneter Auslegung der Materialien im Falle eines Unfalls durch ein gesteuertes Entweichen des im Luftkissen herrschenden Innendrucks Energie abgebaut wird, falls die Kupplungseinrichtung brechen sollte und das Anhängerfahrzeug von hinten auf den Aufbau des Zugfahrzeugs schlägt, insbesondere das Fahrerhaus.

Erfindungsgemäß füllt das Luftkissen den Spalt vollflächig innerhalb der äußeren Querschnittskontur eines kastenförmigen Aufbaus des Zugfahrzeugs aus. Diese Ausführungsform ermöglicht es, gegebenenfalls ein auf das Zugfahrzeug aufschlagendes Anhängerfahrzeug abzufangen. Darüber hinaus verformt sich das Luftkissen während sehr enger Kurvenfahrten besonders günstig, ohne dass ein Teil der Luftmenge abgelassen werden muss oder es zu einem verschleißintensiven Anstieg des Innendrucks kommt, da die im Luftkissen eingeschlossene Luft ohne Einschnürungen oder Umlenkungen von der Kurveninnenseite mit einem aufgrund der Annäherung von Zug- und Anhängerfahrzeug kleinen zur Verfügung stehenden Volumen zur Kurvenaußenseite mit einem großen Volumen strömen kann.

Das mindestens eine Luftkissen kann eine Aussteifung mittels Tragspangen aufweisen. Bei den Tragspangen handelt es sich um elastische Stäbe, die dem Luftkissen zu einer vorgegebenen Form verhelfen und im drucklosen Zustand des Luftkissens ein Flattern verhindern. Die Tragspangen können innen oder außen am Luftkissen angeordnet sein. Vorzugsweise sind die Tragspangen ortsfest am Aufbau angebaut und sind als integral, homogenes Bauteil hergestellt.

Überraschenderweise hat sich herausgestellt, dass eine signifikante Verbesserung des Luftwiderstandsbeiwertes bereits erreicht wird, wenn das Luftleitelement den Spalt auf ein Restspaltmaß von maximal 500 mm reduziert.

Vorteilhafterweise ist innerhalb des Füllkanals und/oder an dessen Eintritt am Luftkissen ein Rückschlagventil angeordnet. Das Rückschlagventil kann bei einer vorgegebenen unteren Fahrgeschwindigkeit verschlossen bleiben, so dass das Luftkissen zum Beispiel im Stau, bei Ortsdurchfahrten oder generell bei wechselnden Fahrgeschwindigkeiten seine maximale Kontur beibehält und zwischenzeitlich nicht zusammenfällt.

Günstigerweise sollte jedoch das Luftkissen mit einem Abblasventil zusammenwirken, über welches zum Rangieren oder bei einem Wechsel des Anhängerfahrzeugs der Innendruck des Luftkissens in die Umgebung abgelassen wird. Bei einem Wechsel des Anhängerfahrzeugs wird durch diese Vorgehensweise sichergestellt, dass auch Anhängerfahrzeuge mit einem größeren vorderen Überstand angekuppelt werden können, ohne mit dem Luftkissen zu kollidieren. Vorzugsweise ist dient als Abblasventil das Rückschlagventil.

Gemäß einer besonders bevorzugten Ausführungsform ist das Luftkissen an einem formstabilen Spoiler befestigt. Dieser formstabile Spoiler kann als Dachspoiler auf der Dachwand des Aufbaus oder als Seitenspoiler an den Seitenwänden des Aufbaus angeordnet sein und vorteilhafterweise mit seinem in Fahrtrichtung vorderen Ende schwenkbar an dem Zugfahrzeug angreifen. Somit ist der formstabile Spoiler an mindestens einer Stelle dauerhaft und unmittelbar an dem Aufbau befestigt. Dies hat den Vorteil, dass ein wesentlicher Teil der auf den Spoiler wirkenden Kräfte über die schwenkbare Anbringung in den Aufbau eingeleitet werden. Torsionskräfte oder Zugkräfte wären über einen Kraftfluss ausschließlich durch das Luftkissen kaum zu beherrschen. Mit Hilfe des Luftkissens stellt sich der formstabile Spoiler geschwindigkeitsabhängig in die vorgesehene Fahrstellung auf. Das Luftkissen dient somit als Aktuator für den formstabilen und gegenüber dem Aufbau zwangsgeführten Spoiler.

Zum besseren Verständnis wird die Erfindung nachfolgend anhand von insgesamt 4 Figuren näher erläutert. Dabei zeigen die
- **Fig. 1:**: eine schematische Seitenansicht auf ein Zug- und Anhängerfahrzeug mit einem Luftleitelement im Fahrmodus gemäß einer ersten Ausführungsform;
- **Fig. 2:**: eine Seitenansicht gemäß Fig. 1 mit dem Luftleitelement im Stand- und Rangiermodus;
- **Fig. 3:**: eine Rückansicht auf das Zugfahrzeug gemäß Fig. 1; und
- **Fig. 4:**: eine Vorderansicht auf das Zugfahrzeug mit einer an einem Dachspoiler angeordneten Lufteintrittsöffnung.

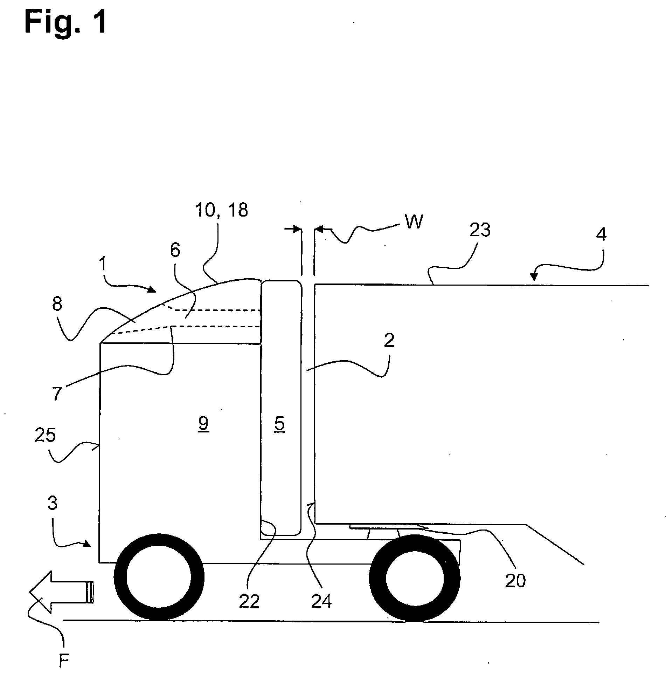

Die Fig. 1 zeigt das erfindungsgemäße Luftleitelement 1 umfassend ein Luftkissen 5 und einen daran angeschlossenen Füllkanal 6, der an seinem in Fahrtrichtung F liegenden, vorderen Ende an einer Anströmseite 25 des Zugfahrzeugs 3 mündet. Unter der Anströmseite wird die vom Fahrtwind angeströmte Kontur des Zugfahrzeugs 3 verstanden.

Das Luftkissen 5 ist in einem Spalt 2 zwischen einem Zugfahrzeug 3 und einem Anhängerfahrzeug 4 angeordnet. Bei dem Zugfahrzeug 3 handelt es sich um eine Sattelzugmaschine, an dessen heckseitigem Ende sich als Kupplungseinrichtung eine gewöhnliche Sattelkupplung 20 befindet. Das Anhängerfahrzeug 4 ist dementsprechend als Sattelauflieger ausgebildet und mittels eines an der Unterseite befestigten Königszapfens (nicht dargestellt) lösbar in der Sattelkupplung 20 gehalten.

Das Zugfahrzeug 3 weist einen Aufbau 9 auf, in dem unter anderem das Fahrerhaus untergebracht ist. Über dem Aufbau 9 ist zudem ein fest montierter Spoiler 18 zu erkennen, welcher den Aufbau 9 im Sinne einer Dachwand 10 nach oben begrenzt. In diesem Fall entspricht das vertikale Niveau der Dachwand 10 ungefähr dem Niveau des Anhängerfahrzeugs 4.

An einer Rückwand 22 des Aufbaus 9 des sich in Fahrtrichtung F bewegenden Zugfahrzeugs 3 ist das Luftkissen 5 befestigt, welches im gezeigten Fahrmodus zu seiner maximalen Größe aufgeblasen ist und sowohl mit der aus dem Spoiler 18 gebildeten Dachwand 10 des Zugfahrzeugs 3 als auch der Dachwand 23 des Anhängerfahrzeugs 4 in einer gemeinsamen horizontalen Ebene abschließt. In Fahrtrichtung F kann ein Restspaltmaß W von maximal 500 mm zwischen dem Luftkissen 5 und einer Frontseite 24 des Anhängerfahrzeugs 4 verbleiben.

Das Luftkissen 5 ist an den Füllkanal 6 angeschlossen, der auf einer dem Luftkissen 5 abgewandten Seite 7 in Fahrtrichtung F des Zugfahrzeugs 3 in einer Lufteintrittsöffnung 8 mündet. Die Lufteintrittsöffnung 8 ist in Fahrtrichtung F ausgerichtet und wird demzufolge im Fahrmodus vom Fahrtwind angeströmt. Günstigerweise weist die Lufteintrittsöffnung 8 eine konische Aufweitung in Fahrtrichtung F auf, wodurch sich besonders effizient ein Staudruck innerhalb des Füllkanals 6 und des dahinter befindlichen Luftkissens 5 aufbaut. Aufgrund des Staudruckes bläht sich das Luftkissen 5 auf beziehungsweise fällt bei nachlassendem Staudruck zusammen. Da üblicherweise bei schneller Geradeausfahrt keine engen Kurvenfahrten mit einer erheblichen Relativbewegung zwischen Zugfahrzeug 3 und Anhängerfahrzeug 4 zu erwarten sind, ist das Luftkissen 5 maximal gefüllt und es stellt sich ein minimales Restspaltmaß W ein.

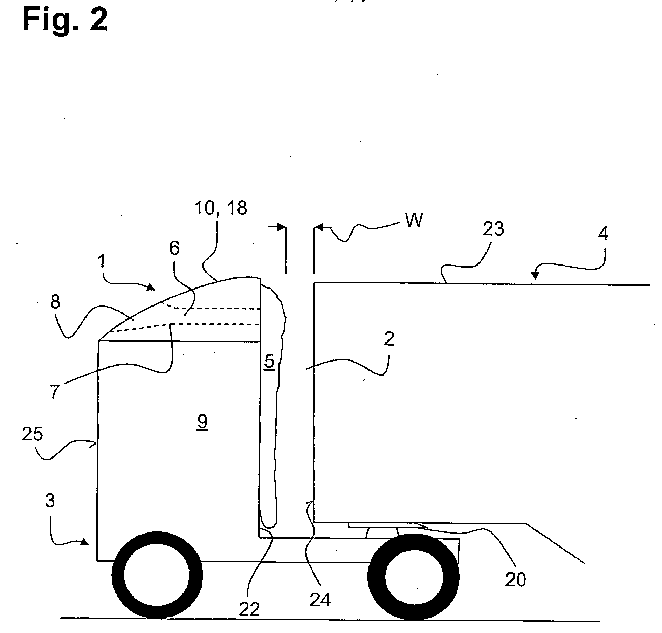

Sobald das Zugfahrzeug 3 seine Fahrgeschwindigkeit verringert, sinkt auch der Staudruck im Luftkissen 5, so dass dieses im Stand- und Rangiermodus entsprechend der Darstellung in Fig. 2 in sich zusammenfällt.

Die Fig. 2 zeigt ein stehendes Zugfahrzeug 3, dessen Luftkissen 5 aufgrund des fehlenden Staudrucks unter seinem Eigengewicht zusammengesackt ist. Demzufolge hat sich das Restspaltmaß W mehr als verdoppelt, so dass nunmehr auch ein Rangieren mit einem engen Kurvenradius möglich ist. Der während der Fahrt aufgebaute Staudruck ist bereits bei sinkender Fahrgeschwindigkeit sukzessive über den Füllkanal 6 entwichen.

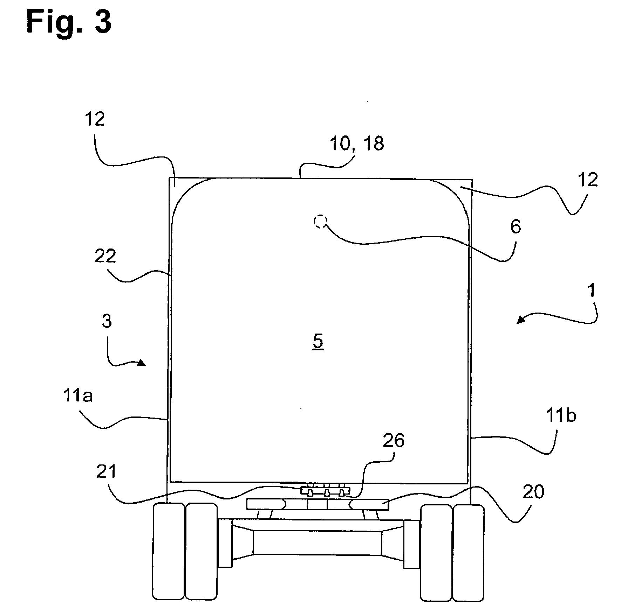

Die Fig. 3 verdeutlicht die annähernd flächendeckende Abdeckung einer Querschnittskontur 12 des Aufbaus 9 in Fahrtrichtung F des Zugfahrzeugs 3 durch das Luftkissen 5. Im vorliegenden Fall wird der Aufbau 9 durch den Spoiler 18 bis auf das Niveau des Anhängerfahrzeugs 4 erhöht. Das Luftkissen 5 schließt auf seiner Oberseite demzufolge mit dem Spoiler 18 ab. In seitlicher Richtung erstreckt sich das Luftkissen 5 bis an die Seitenwände 11 a, 11 b, die sich im Bereich des Spoilers 18 fortsetzen.

Aufgrund der vollflächigen Abdeckung der Rückwand 22 des Aufbaus 9 durch das Luftkissen 5 ist es notwendig, die ansonsten mittig an der Rückwand 22 angeordnete Versorgungskonsole 21 zu verlegen und dadurch einen Zugriff auf die Versorgungsleitungen 26 zu ermöglichen.

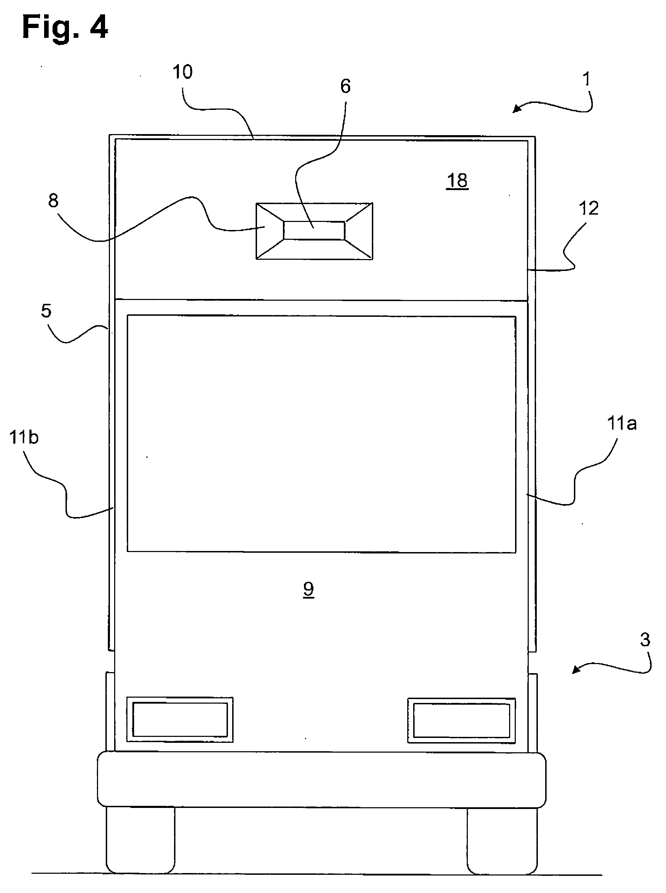

In der Fig. 4 ist ein Zugfahrzeug 3 im Fahrmodus mit Anhängerfahrzeug 4 gezeigt, das heißt mit aufgeblasenem Luftkissen 5 des Luftleitelementes 1. Das Luftkissen 5 steht seitlich sowohl über die Seitenwände 11a, 11 b als auch die vom Spoiler 18 gebildete Dachwand 10 geringfügig über. Der Füllkanal 6 ist in den Spoiler 18 integriert.

Um im Fahrbetrieb einen ausreichenden Staudruck bereitstellen zu können, weist der in der Fahrzeuglängsachse ausgerichtete Füllkanal 6 eine sich in Fahrtrichtung konisch aufweitende Lufteintrittsöffnung 8 auf. Grundsätzlich wäre es jedoch auch möglich, den Füllkanal 6 oberhalb des Spoilers 18, seitlich oder unter dem Aufbau 9 vorzusehen.

### Bezugszeichenliste

- 1: Luftleitelement
- 2: Spalt
- 3: Zugfahrzeug
- 4: Anhängerfahrzeug
- 5: Luftkissen
- 6: Füllkanal
- 7: Luftkissen abgewandte Seite Füllkanal
- 8: Lufteintrittsöffnung
- 9: Aufbau Zugfahrzeug

- 10: Dachwand
- 11a, b: eitenwand
- 12: Querschnittskontur Aufbau
- 18: Spoiler

- 20: Sattelkupplung
- 21: Versorgungskonsole
- 22: Rückwand Aufbau Zugfahrzeug
- 23: Dachwand Anhängerfahrzeug
- 24: Frontseite Anhängerfahrzeug
- 25: Anströmseite Zugfahrzeug
- 26: Versorgungsleitung

- F: Fahrtrichtung
- W: Restspaltmaß

## Patentansprüche

1. Luftleitelement (1) für ein verbessertes Überströmen eines Spaltes (2) zwischen einem Zugfahrzeug (3) und einem Anhängerfahrzeug (4), wobei das Luftleitelement (1) an dem Zugfahrzeug (3) oder dem Anhängerfahrzeug (4) befestigbar ist und ein flexibles und luftdichtes Luftkissen (5) umfasst, welches an einen Füllkanal (6) angeschlossen ist, wobei der Füllkanal (6) auf seiner zum Luftkissen (5) abgewandten Seite (7) eine in Fahrtrichtung (F) ausgerichtete Lufteintrittsöffnung (8) aufweist, die derart angeordnet ist, dass das Luftkissen (5) ausschließfich durch einen Staudruck des Fahrtwindes gefüllt wird,
**dadurch gekennzeichnet,**
**dass** das Luftkissen (5) den Spalt (2) vollflächig innerhalb der äußeren Querschnittskontur (12) eines kastenförmigen Aufbaus (9) des Zugfahrzeugs (3) ausfüllt und sich das Luftkissen (6) während einer Kurvenfahrt derart verformt, dass die im Luftkissen (6) eingeschlossene Luft von der Kurveninnenseite mit einem aufgrund der Annäherung von Zugfahrzeug (3) und Anhängerfahrzeug (4) kleinen zur Verfügung stehenden Volumen zur Kurvenaußenseite mit einem großen Volumen strömt.

2. Luftleitelement nach Anspruch 1, **dadurch gekennzeichnet, dass** das mindestens eine Luftkissen (5) eine Aussteifung mittels Tragspangen (15) aufweist.

3. Luftleitetement nach Anspruch 1 oder 2, **dadurch gekennzeichnet, dass** das Luftleitelement (1) den Spalt (2) auf ein Restspaltmaß (W) von maximal 500 mm reduziert.

4. Luftleitelement nach einem der Ansprüche 1 bis 3, **dadurch gekennzeichnet, dass** innerhalb des Füllkanals (6) und/oder an dem Luftkissen (5) ein Rückschlagventil (16) angeordnet Ist.

5. Luftleitelement nach einem der Ansprüche 1 bis 4, **dadurch gekennzeichnet, dass** an dem Luftkissen (5) ein Abblasventil (17) angeordnet ist.

6. Luftleitelement nach Anspruch 5, **dadurch gekennzeichnet, dass** das Abblasventil (17) mit einem Fahrzeugsteuergerät (27) und/oder einem externen Steuergerät (28) zusammenwirkt.

7. Luftleitelement nach Anspruch 6, **dadurch gekennzeichnet, dass** das Fahrzeugsteuergerät (27) und/oder das externe Steuergerät (28) ein Steuersignal für das Abblasventil (17) bereitstellt, welches einen Brems- oder Lenkgradienten berücksichtigt.

8. Luftleitelement nach einem der Ansprüche 1 bis 7, **dadurch gekennzeichnet, dass** das Luftkissen (5) an einem formstabilen Spoiler (18) befestigt ist.

9. Luftleitelement nach Anspruch 8, **dadurch gekennzeichnet, dass** der Spoiler (18) mit seinem in Fahrtrichtung (F) vorderen Ende (19) schwenkbar an dem Zugfahrzeug (3) angreift.

## Claims

1. Air guiding element (1) for improved flow over a gap (2) between a tractive vehicle (3) and a trailer vehicle (4), wherein the air guiding element (1) can be mounted on the tractive vehicle (3) or the trailer vehicle (4) and comprises a flexible and airtight air cushion (5), which is connected to a filling channel (6), wherein the filling channel (6) has an air entry opening (8) oriented in the direction of travel (F) on the side (7) of the filling channel (6) facing away from the air cushion (5), said air entry opening being arranged in such a way that the air cushion (5) is filled exclusively by a dynamic pressure of the relative wind,
**characterized in that**,
the air cushion (5) entirely fills the gap (2) within the outer cross section contour (12) of a boxlike body (9) of the tractive vehicle (3) and the air cushion deforms during cornering in a way that the air enclosed in the air cushion (5) flows from the inner curve side where the volume is smaller on account of the tractive vehicle (3) and trailer vehicle (4) coming close together, to the outer curve side with a large volume.

2. Air guiding element according to claim 1, **characterized in that** at least one air cushion (5) has a stiffening by means of support braces (15).

3. Air guiding element according to one of claims 1 or 2, **characterized in that** the air guiding element (1) reduces the gap (2) to a residual gap dimension (W) of at most 500 mm.

4. Air guiding element according to one of claims 1 to 3, **characterized in that** a check valve (16) is arranged inside the filling channel (6) and/or on the air cushion (5).

5. Air guiding element according to one of claims 1 to 4, **characterized in that** a relief valve (17) is arranged on the air cushion (5).

6. Air guiding element according to claim 5, **characterized in that** the relief valve (17) interacts with a vehicle controller (27) and/or an external controller (28).

7. Air guiding element according to claim 6, **characterized in that** the vehicle controller (27) and/or the external controller (28) provides a control signal for the relief valve (17), which takes into account a braking or steering gradient.

8. Air guiding element according to one of claims 1 to 7, **characterized in that** the air cushion (5) is fastened to a shape-stable spoiler (18).

9. Air guiding element according to claim 8, **characterized in that** the spoiler (18) engages by its front end (19) in the direction of travel (F) with the tractive vehicle (3) in swiveling fashion.

## Revendications

1. Elément de guidage d'air pour permettre un meilleur passage de l'air par un espace (2) entre un véhicule tracteur (3) et un véhicule remorqué (4), sachant que l'élément de guidage d'air (1) peut être fixé sur le véhicule tracteur (3) ou sur le véhicule remorqué (4) et comprend un coussin d'air (5) souple et étanche à l'air qui est raccordé à un canal de remplissage (6), sachant que le canal de remplissage (6) présente, sur son côté (7) opposé au coussin d'air (5), une ouverture d'entrée d'air (8) dirigée dans le sens de marche (F) qui est disposée de telle sorte que le coussin d'air (5) est rempli exclusivement par une pression dynamique du vent de marche,
**caractérisé en ce que** le coussin d'air (5) remplit l'espace (2) sur toute la surface à l'intérieur du contour extérieur de section (12) d'une carrosserie en forme de caisson (9) du véhicule tracteur (3), et le canal de remplissage (6) se déforme pendant un virage de telle sorte que l'air renfermé dans le canal de remplissage (6) s'écoule, depuis le côté intérieur du virage avec un petit volume disponible en raison du rapprochement du véhicule tracteur (3) et du véhicule remorqué (4), vers le côté intérieur du virage avec un grand volume.

2. Elément de guidage d'air selon la revendication 1, **caractérisé en ce que** le coussin d'air (5) au moins unique présente un renforcement au moyen d'attaches porteuses (15).

3. Elément de guidage d'air selon la revendication 1 ou 2, **caractérisé en ce que** l'élément de guidage d'air (1) réduit l'espace (2) à une dimension résiduelle (W) de 500 mm maximum.

4. Elément de guidage d'air selon l'une des revendications 1 à 3, **caractérisé en ce qu'**un clapet antiretour (16) est disposé à l'intérieur du canal de remplissage (6) et/ou sur le coussin d'air (5).

5. Elément de guidage d'air selon l'une des revendications 1 à 4, **caractérisé en ce qu'**une soupape de décharge (17) est disposée sur le coussin d'air (5).

6. Elément de guidage d'air selon la revendication 5, **caractérisé en ce que** la soupape de décharge (17) coopère avec un appareil de commande (27) du véhicule et/ou avec un appareil de commande externe (28).

7. Elément de guidage d'air selon la revendication 6, **caractérisé en ce que** l'appareil de commande (27) du véhicule et/ou l'appareil de commande externe (28) fournit pour la soupape de décharge (17) un signal de commande qui prend en compte un gradient de freinage ou de direction.

8. Elément de guidage d'air selon l'une des revendications 1 à 7, **caractérisé en ce que** le coussin d'air (5) est fixé sur un déflecteur indéformable (18).

9. Elément de guidage d'air selon la revendication 8, **caractérisé en ce que** le déflecteur (18) s'engage à pivotement sur le véhicule tracteur (3) par son extrémité avant (19) dans le sens de marche (F).
